**Europäisches Patentamt**

**European Patent Office**

**Office européen des brevets**

(19)

(11) Veröffentlichungsnummer: **0 068 515**
**B1**

(12)

# EUROPÄISCHE PATENTSCHRIFT

(45) Veröffentlichungstag der Patentschrift:
**29.10.86**

(51) Int. Cl.⁴: **G 01 T 1/38**

(21) Anmeldenummer: **82105892.2**

(22) Anmeldetag: **01.07.82**

(54) Verfahren und Vorrichtung zum spezifischen Nachweis von alpha-Strahlen und/oder beta- und gamma-Strahlen in Proportional-Zählrohren bei Gegenwart jeweils der anderen Strahlungsart sowie Anwendung.

(30) Priorität: **01.07.81 DE 3125978**

(43) Veröffentlichungstag der Anmeldung:
**05.01.83 Patentblatt 83/1**

(45) Bekanntmachung des Hinweises auf die Patenterteilung:
**29.10.86 Patentblatt 86/44**

(84) Benannte Vertragsstaaten:
**BE DE FR GB IT**

(56) Entgegenhaltungen:
**DE - A - 2 500 510**
**DE - A - 3 003 909**
**US - A - 3 924 106**
**US - A - 4 262 203**

**INSTRUMENTS & EXPERIMENTAL TECHNIQUES, Band 18, Nr. 6, Punkt 1, November/Dezember 1975, Seiten 1764-1767, New York, USA, E.N. KUZIN et al.: "Device for identifying recoil protons according to the shape of the pulses in a proportional counter"**
**JOURNAL OF NUCLEAR ENERGY, Band 24, 1970, Seiten 123-132, Pergamon Press, G.B., M. LALOVIC et al.: "The energy distribution of antimony-beryllium photoneutrons"**
**INSTRUMENTS AND EXPERIMENTAL TECHNIQUES, Band 14, Nr. 2, März/April 1971, Seiten 392-396, New**

(73) Patentinhaber: **LABORATORIUM PROF. DR. RUDOLF BERTHOLD, Calmbacher Strasse 22, D-7547 Wildbad 1 (DE)**

(72) Erfinder: **Berthold, Fritz, Dr., Dipl.-Phys., Engelsbranderstrasse 12, D-7540 Neuenbürg (DE)**
Erfinder: **Pfleger, Manfred, Helene-Huber-Strasse 9, D-7547 Wildbad 1 (DE)**

(74) Vertreter: **Dr. Elisabeth Jung Dr. Jürgen Schirdewahn Dipl.-Ing. Claus Gernhardt, P.O. Box 40 14 68 Clemensstrasse 30, D-8000 München 40 (DE)**

(56) Entgegenhaltungen: (Fortsetzung)
**York, USA, A.A. OMEL'YANENKO et al.: "Certain possibilities of the application of the two-dimensional analysis mode in neutron spectrometry"**
**KERNTECHNIK, 5. Jg. (1963), H.3, S. 97-99**
**NUCLEAR INSTRUMENTS AND METHODS, Bd. 96, (1971), S. 397-403, dito Bd. 88, (1970), S. 181**
**G.F.KNOLL, RADIATION DETECTION AND MEASUREMENT, New York, (1979), S. 82,83,704-707**

## Beschreibung

Die Erfindung bezieht sich auf ein Verfahren gemäss Oberbegriff von Anspruch 1.

Zur spezifischen Messung von α-Strahlen sind Proportionalzählrohre besonders geeignet, weil damit ein grosser Teil der α-Strahlen aufgrund ihrer $10^2$-$10^3$-fach höheren spezifischen Ionisation durch Messung der, der Primärionisation im Zählrohr (und damit der im Zählrohr absorbierten Energie) proportionalen, Amplitude des Stromstosses, welcher das zeitliche Integral über den Strom und somit die vom Zählrohr abgegebene Ladungsmenge darstellt, gut von β- und γ-Strahlen unterschieden werden kann. (In der Strahlungsmesstechnik wird eine solche Grösse, d.h. die Amplitude eines von dieser Ladungsmenge abgeleiteten und dazu proportionalen Signals bzw. Impulses, als «Impulshöhe» bezeichnet).

Dennoch gibt es eine Überlappung des niederenergetischen Teiles des α-Spektrums mit dem β- bzw. γ-Spektrum. Diese Überlappung führt insbesondere dann zu Störungen der α-Messung, wenn der Anteil niederenergetischer α-Strahlung besonders gross ist, z.B. durch Vorabsorption der α-Strahlen in Filtern, im Zählrohr-Eintrittsfenster und im Luftraum zwischen Strahlenquelle und Eintrittsfenster und/oder der Anteil von β-Strahlen mit hohem Energieverlust im aktiven Zählrohrvolumen besonders gross ist. Den β-Strahlen gleichzusetzen sind auch Sekundärelektronen, die durch γ-Strahlen aus dem Präparat oder aus der Umgebung im Zählrohr ausgelöst werden. Diese Überlappung des β- bzw. γ-Spektrums mit dem niederenergetischen Teil des α-Spektrums beeinträchtigt also die getrennte Messung von α- und β-Strahlung.

Eine solche übliche Impulshöhendiskriminierung der in Proportionalzählrohren pro ionisierendes Teilchen abgegebenen Ladungsmenge, die der im wirksamen Zählrohrvolumen absorbierten Energie proportional ist – deshalb der Name «Proportional»-Zählrohr-, ist beispielsweise aus der US-A-4 262 203 oder auch der US-A-3 924 106 bekannt, wobei in der letztgenannten Vorveröffentlichung zwei Messkanäle vorgesehen sind, von denen einer nur hohe und der andere auch niedere Impulse berücksichtigt (Sp. 2, Zn. 1 bis 28). Eine Unterscheidung von β-Ereignissen und α-Ereignissen gleichen Energiebereichs ist nicht ohne weiteres möglich.

In der DE-A-3 003 309 ist eine Detektoreinrichtung für die gleichzeitige Messung von α- und/oder β-Teilchen beliebiger Energie mit ein und demselben Detektorelement beschrieben, bei der die Teilchen mittels ihrer Impulsform und/oder Impulshöhe diskriminiert werden sollen. Es hat sich herausgestellt, dass dieses Ziel mit der genannten Detektoreinrichtung nicht erreicht werden kann.

Bezüglich der Diskriminierung nach Impulshöhe, also der erläuterten «üblichen» Impulshöhendiskriminierung der in Proportionalzählrohren pro ionisierendes Teilchen abgegebenen Ladungsmenge, gilt nämlich das zuvor schon im Zusammenhang mit den US-A-4 262 203 und US-A-3 924 106 Dargelegte. Aber auch die Impulsformen sind bei α- und β-Strahlen nicht grundsätzlich verschieden. Bei gleicher Länge der primären Ionenspur ergeben sich im allgemeinen auch gleichartige Impulsformen.

So sieht zwar auch die DE-A-2 500 510 neben einer «üblichen» Impulshöhendiskriminierung noch eine Impulsformdiskriminierung, speziell nach der Impulsanstiegszeit, vor. Dabei sollen jedoch niederenergetische, insbesondere β-Ereignisse, ungestört von Fremdereignissen erfasst werden, während wiederum α- und β-Strahlen, die gleiche Längen der primären Ionenspur ergeben, nicht voneinander unterschieden werden können.

Daneben ist in der DE-A-2 500 510 noch auf die vielfach Anwendung findende Methode der Reichweitendiskriminierung hingewiesen (S. 8, Zn. 1–4); diese setzt jedoch die Verwendung von Mehrkammer-Spezialzählrohren voraus.

In der nicht vorveröffentlichten EU-A1-0 063 624 ist vorgeschlagen, eine spezielle Art einer Impulsformdiskriminierung zur Unterscheidung von α- und β-Impulsen üblicher, also der Ladungsmenge proportionaler Art innerhalb einer zeitlich konstant gehaltenen Anstiegszeit von etwa 20 nsec vorzusehen.

Die Aufgabe besteht also insbesondere darin, α-Teilchen, deren Energieverlust im aktiven Zählrohrvolumen kleiner oder gleich ist als der von β/γ-Strahlen, von letzteren zu unterscheiden. In Weiterbildung der Erfindung sollen α-Teilchen einerseits und β-Teilchen oder γ-Quanten anderseits getrennt gezählt werden.

Diese Aufgabe wird bei dem gattungsgemässen Verfahren gemäss dem Kennzeichen von Anspruch 1 gelöst.

Es wird also nicht, wie üblich, die vom Proportionalzählrohr abgegebene, der Primärionisation und damit der Energie oder besser dem Energieverlust der Teilchen proportionale Ladungsmenge, sondern die Amplitude des Zählrohrstromes, also die Ladungsmenge pro Zeiteinheit, als Kriterium für die Unterscheidung von α- und β-Strahlen (und/oder γ-Strahlen, die sekundär im Zählrohr Elektronen auslösen) benutzt. Eine Messung von Kernstrahlungsereignissen proportional zur Amplitude des Zählrohrstromes und das Prinzip einer hierbei benutzbaren Schaltung wird im Buch «Radiation Detection and Measurement» von G.F. Knoll, Verlag John Wiley and Sons, New York, 1979, S. 82 (Case I) erklärt, jedoch bisher nicht für α-Teilchen-Diskriminierung in Betracht gezogen, für die in dieser Referenz andere Verfahren vorgeschlagen werden.

Dem Zählrohrstrom gleichzusetzen sind die durch zeitliche Differenzierung aus der Ladungsmenge bzw. einer dieser proportionalen Grösse abgeleiteten Signale.

Selbstverständlich ist es unmöglich, den momentanen Zählrohrstrom mit unendlich hoher Zeitauflösung zu messen. Wegen der endlichen Bandbreite von Verstärkern sowie der begrenzten Zeitauflösung jeder Schaltung wird zwangsläufig eine gewisse Mittelwertsbildung bei der Strommessung vorgenommen. Eine gewisse Mittelwertsbildung ist sogar sinnvoll, um kurzfristige, statistisch bedingte Stromspitzen zu glätten. Anderseits darf nicht über Zeiten gemittelt werden, die von der Grössenordnung oder der Dauer der β- und γ-Impulse sind, da dann eine Unterscheidung von α-Strahlen einerseits und β- oder γ-Strahlen mit gleichem Energieverlust nicht mehr möglich ist, denn es handelt sich in diesem Fall praktisch wieder um eine Integration des Stromes. In praxi können die Mittelungszeiten etwa zwischen 5 und 50 ns liegen, wobei die Mitteilungzeit zur Erzielung optimaler Trennung von α- und β-Teilchen nicht länger als die Dauer der kürzesten von α-Teilchen ausgelösten Impulse sein soll.

Beispielsweise wurde in einem Grossflächendurchflusszählrohr (H. Kiefer und R. Maushart, «Strahlenschutzmesstechnik», Verlag G. Braun, Karlsruhe, 1964, 214.1) mit einer Höhe des Zählraumes von 20 mm, einem Abstand der Zähldrähte untereinander von 20 mm und einem Gesamtdurchmesser von 220 mm ermittelt, dass der praktisch wesentliche Überlappungsbereich von α- und β-Strahlen etwa 20 bis 200 keV beträgt. In diesem überlappenden Energiebereich sind die Stromimpulse von α-Strahlen mit Energien zwischen 20 und 200 keV ca. 30 bis 40 ns lang, während die Stromimpulse von β-Strahlen im gleichen Energiebereich etwa fünfmal länger sind. Unter Energie ist dabei die im aktiven Zählrohrvolumen abgegebene Energie (der Energieverlust) zu verstehen. Der Energieverlust von β-Strahlen kann in Zählrohren üblicher Dimensionen höchstens 200 keV betragen. Zur Auswertung der Stromimpulse ist ein Verstärker mit einer Anstiegszeit von etwa 20 ns geeignet. Die verstärkten Impulse, deren Amplitude dem Strom entspricht, können einem Schwellenwertdiskriminator zugeführt werden.

Gemäss Anspruch 2 kann die Empfindlichkeit so eingestellt werden, dass die α-Impulse über und die β-Impulse oder gegebenenfalls γ-Impulse unter dem Schwellenwert liegen. Alternativ könnte nach Anspruch 3 das «Strom-Impulshöhenspektrum» (gegebenenfalls logarithmiert) einem Vielkanal-Impulshöhenanalysator zugeführt werden.

Den Gewinn an besserer Trennung von α- und β-Strahlung kann man nutzbar machen, um

(1) – die Zählausbeute für α-Strahlen zu erhöhen, indem die für die Strommessung massgebliche untere Schwelle so niedrig angesetzt wird, dass auch noch α-Teilchen aus dem Energieüberlappungsbereich mit erfasst werden, auf die bei einer Ladungsmengendiskriminierung wegen zu hoher β-Empfindlichkeit verzichtet werden müsste, und/oder um

(2) – die Einstreuung von β-Ereignissen zu reduzieren und so den Messfehler infolge Einstreuung von β- (und γ-)-Strahlen zu verkleinern.

Bei der ersten Alternative kann man im Fall von $^{241}$Am in einer üblichen Detektoreinrichtung ca. 10% mehr Zählausbeute erreichen.

Bei der zweiten Alternative wird die Einstreuung von z.B. $^{90}$Sr β-Strahlen um ca. den Faktor 20 verringert. Die Erfindung ermöglicht es somit, α-

Strahlen und/oder β- und γ-Strahlen jeweils spezifisch nachzuweisen und insbesondere auch zu zählen.

Die spezifische Zählung von α-Strahlen kann durch direkte Messung der Amplituden der impulsartig auftretenden Ströme als einzigem Parameter bewirkt werden. Dieses Verfahren ist im allgemeinen bevorzugt (Anspruch 4), insbesondere im Anwendungsfall des Strahlenschutzes.

Stattdessen könnte man auch in Betracht ziehen, den Strom indirekt aus zwei Parametern zu bestimmen, etwa durch Energiebestimmung mittels Messung der Ladungsmenge (die konventionelle Impulshöhenbestimmung) als erstem Parameter und der Dauer desselben Impulses als zweitem Parameter; der Quotient beider Parameter ergibt dann indirekt den mittleren Strom. Dieses Verfahren ist zwar aufwendiger und deshalb meist als ungünstiger gegenüber dem Verfahren der direkten Strommessung als einzigem Parameter zu beurteilen. Es mag aber Vorteile dann haben, wenn die Strahlungsenergie ohnehin gemessen wird, so dass dann die zusätzliche Messung der Impulsdauer für die Unterscheidung der Strahlungsquellen auch nur die Messung eines zusätzlichen Parameters bedeutet. Aber auch wenn man ohnehin eine Energiemessung vornimmt, kann es vorzuziehen sein, als zweiten Parameter ebenfalls eine direkte Strommessung zur Teilchenunterscheidung vorzusehen.

Der der Erfindung zugrundeliegende Effekt könnte auf folgendem beruhen:

Die β-Strahlen mit den höchsten Energien haben im Zählrohr im Durchschnitt die grössten Bahnlängen. Dann haben die in der Ionisationsspur (Bahn) gebildeten Elektronen besonders unterschiedliche Driftzeiten vom Entstehungsort bis zum Zähldraht. Die Driftzeiten bestimmen die Gesamtdauer des Stromimpulses. β-Strahlen mit den höchsten Energien zeigen daher die grössten Gesamtimpulsdauern. Die mittlere Amplitude des Stroms ist dann relativ klein.

Umgekehrt haben die hier betrachteten niederenergetischen α-Strahlen Reichweiten, die klein gegenüber der Zählrohrabmessung sind. Somit sind die Driftzeit und die Gesamtimpulsdauer relativ klein. Der mittlere Strom ist dann relativ gross.

Das erfindungsgemässe Verfahren ist besonders geeignet, α-Strahlen von β-Strahlen zu selektieren, wobei störende β- und γ-Strahlen ausgeschieden werden. Ist man an der spezifischen Messung sowohl der α-Strahlen als auch der β-Strahlen interessiert, so kann die getrennte Messung in an sich bekannter Weise sowohl nacheinander als auch gleichzeitig erfolgen.

Eine getrennte Messung von α- und β-Strahlen in Folge wird üblicherweise so durchgeführt, dass durch Umschalten der als Arbeitsspannung des Zählrohres dienenden Hochspannung nacheinander je eine Messung im α-Plateau und eine Messung im α + β-Plateau des Proportionalzählrohres durchgeführt werden (z.B. H. Kiefer u. R. Maushart, «Überwachung der Radioaktivität in Abwasser und Abluft», Heft 1, 1961, B.G. Teubner Verlagsgesellschaft, Stuttgart, S. 36–37). Da die Zahl der von β-Strahlen ausgelösten Ionenpaare vor allem aufgrund der viel geringeren spezifischen Ionisation wesentlich kleiner als die bei den meisten α-Strahlen ist, muss bei β-Strahlen eine wesentlich höhere Gasverstärkung durch höhere Arbeitsspannung gewählt werden, damit die Mehrzahl der β-Impulse über der Diskriminatorschwelle liegt. Deshalb befindet sich das α + β-Plateau bei höheren Spannungen als das α-Plateau. Etwa vorhandene α-Strahlen werden im α + β-Plateau mitgemessen. Zur Ermittlung der allein von den β-Strahlen herrührenden Impulsrate wird vom Resultat der Messung im α + β-Plateau das Ergebnis im α-Plateau abgezogen. Dieses Verfahren ist allerdings nicht ganz korrekt; denn bei Überlappung der Energien von α- und β-Strahlen können im α-Plateau die im Überlappungsbereich befindlichen α-Strahlen nicht mit erfasst werden.

Wie dargestellt, wird durch die Messung von α-Strahlen gemäss der Erfindung die Einwirkung einer Überlappung weitgehend reduziert. Dies ermöglicht es, gemäss Anspruch 5 mit demselben Verstärker, der zur Strommessung für die Bestimmung der α-Strahlen eingesetzt wird, bei einem erhöhten Wert der Hochspannung auch im α + β-Plateau zu messen. So kann die spezifische Rate der β-Zerfälle durch Differenzbildung aus der Messung bei erhöhter Spannung minus der reinen α-Strahlenmessung genauer als bisher gewonnen werden.

Vorzugsweise wird dabei gemäss Anspruch 6 bei beiden Messungen der untere Strom-Schwellenwert konstant gehalten, ja insbesondere überhaupt nur die Arbeitsspannung des Zählrohres verändert.

Es kann auch gemäss Anspruch 7 sinnvoll sein, im α + β-Plateau konventionell mit Verstärken zu messen, welche die gesamte Ladungsmenge integrieren. Dabei ist das Signal-zu-Rausch-Verhältnis besser, aber der Geräteaufwand grösser.

Gegenüber der Messung in zwei nacheinanderliegenden Zeitintervallen ist eine gleichzeitige getrennte Messung sehr wünschenswert, da hierbei die insgesamt aufzuwendende Messzeit verkürzt und der Probendurchsatz erhöht wird. Es gibt auch Fälle, in denen eine gleichzeitige getrennte α + β-Messung sogar unbedingt erforderlich ist, wie bei der α-β-Pseudokoinzidenzmethode (H. Gebauer, «Kerntechnik» 7, 1965, S. 322–325) zur Unterscheidung natürlicher und künstlicher Radioaktivität in der Luftüberwachung.

Die am weitesten verbreitete Methode zur getrennten gleichzeitigen Messung von α- und β-Strahlen ist die Reichweitendiskriminierung (z.B. H. Kiefer u. R. Maushart, «Überwachung der Radioaktivität in Abwasser und Abluft», Heft 1, 1961, B.G. Teubner Verlagsgesellschaft, Stuttgart, S. 366, Bild 367.1). Hierzu werden zwei direkt benachbarte Zählkammern benutzt. Die der Probe zugewandte erste Zählkammer wird im α-Plateau betrieben. Die zweite Zählkammer wird von der ersten durch eine Trennfolie getrennt. Die Höhe der ersten Zählkammer, das Zählgas sowie das Flächengewicht der Trennfolie sind so ausgewählt, dass α-Teilchen aus der Probe die zweite Zählkammer nicht mehr erreichen können. Somit werden in der zweiten Zählkammer, die im spannungshöheren β-Plateau (α-Strahlen geraten hier nicht mehr hinein) betrieben wird, nur noch die von der Probe emittierten β-Strahlen sowie der Nulleffekt registriert. Diese Methode hat den Nachteil, dass nur solche β-Strahlen registriert werden, deren Reichweite grösser als die der α-Strahlen ist. Niederenergetische β-Strahlen sind daher bei dieser Methode praktisch nicht nachweisbar.

Nun kann man an die konventionelle Energiediskriminierung unter Verwendung einer gemeinsamen Zählkammer denken, wobei ein oberer Energiebereich die γ- und ein tiefer liegender Energiebereich die β-Strahlung ausblenden soll (H. Kiefer u. R. Maushart, «Überwachung der Radioaktivität in Abwasser und Abluft», Heft 1, 1961, B.G. Teubner Verlagsgesellschaft, Stuttgart, S. 366, Bild 366.1). Dabei treten jedoch die eingangs genannten Störungen durch Überlappung der Energiebereiche für α-und β-Strahlen auf.

Eine wesentlich verbesserte getrennte und gleichzeitige Messung von α- und β-Strahlen wird nun durch eine Weiterbildung des erfindungsgemässen Verfahrens der Strommessung erreicht. Zur gleichzeitigen Erfassung der β-Strahlen neben den α-Strahlen könnte man zunächst im Rahmen der Erfindung gemäss Anspruch 8 zusätzlich einen Fensterdiskriminator vorsehen, dessen oberer Strom-Schwellenwert etwa gleich dem unteren Strom-Schwellenwert für α-Messung (kein oberer Strom-Schwellenwert für α-Strahlen erforderlich) sein kann und dessen unterer Schwellenwert knapp über der Amplitude der Rauschimpulse der Verstärker liegt.

Eine derartige Anordnung ist jedoch nicht optimal, da

a) der für die α-Messung erforderliche schnelle Impulsverstärker aufgrund seiner hohen Bandbreite ein schlechtes Signal-zu-Rausch-Verhältnis aufweist, und

b) zur Erzielung eines ausreichenden Rauschabstandes für die β-Messung das Zählrohr in Anbetracht des hohen Rauschpegels des schnellen Verstärkers mit einer relativ hohen Gasverstärkung betrieben werden müsste, wobei jedoch die Gefahr besteht, dass die α-Stromimpulse durch Raumladungsabschirmung am Zähldraht in ihrer Amplitude stark reduziert werden und sich die Überlappung von α- und β-Stromimpulsen wieder verstärkt.

Die beiden widersprüchlichen Forderungen nach hoher Bandbreite für die α-Messung einerseits und hohem Signal-zu-Rausch-Abstand anderseits für die β-Messung lassen sich erfüllen, indem man den Verstärker gemäss Anspruch 9 in zwei parallele Kanäle aufteilt. Hierzu kann man das Zählrohr-Signal zunächst in einer ladungsempfindlichen Eingangsstufe verstärken und danach in zwei parallelen, entsprechend den spezifischen Erfordernissen für die α-Messung einerseits und die β-Messung anderseits angepassten Verstärker-Diskriminatorstufen verarbeiten.

Eine ladungsempfindliche Eingangsstufe kann man so auslegen, dass sie sowohl einen hohen Signal-zu-Rausch-Abstand als auch eine ausreichend kurze Anstiegszeit des Ausgangssignals aufweist. Das Ausgangssignal stellt dabei zwar das zeitliche Integral des Zählrohrstromes dar. Für die α-Messung lässt sich hieraus durch Differentiation wieder ein dem Zählrohrstrom entsprechendes, z.B. proportionales, Signal gewinnen, das man dann in einem schnellen Verstärker-Diskriminator auswertet.

Im Verstärker-Diskriminatorzweig für die α + β-Messung werden die Impulse durch Integration und Differentiation so geformt, dass die Amplitude in konventioneller Weise der gesamten vom Zählrohr abgegebenen Ladung proportional ist. Hierzu muss die Zeitkonstante für die Differenzierung gross gegenüber der Dauer der Zählrohrimpulse sein. Dies ist ohne Nachteile möglich, da in diesem Zweig die α/β-Trennung nicht berücksichtigt zu werden braucht.

Die beiden Kanäle werden nun in der Weise miteinander verknüpft, dass deren Ausgangsimpulse einer Antikoinzidenzstufe zugeführt werden, die nur dann Impulse vom β-Kanal durchlässt, wenn nicht gleichzeitig ein Impuls vom α-Kanal anliegt. Somit werden alle α-Impulse im β-Kanal (eigentlich α + β-Kanal) unterdrückt.

Die Impulse vom α-Kanal werden direkt verarbeitet.

Die Einführung des zweiten Verstärkungszweiges hat auch den Vorteil, dass der α-Kanal mit wesentlich geringeren Verstärkungsfaktoren auskommt, als wenn im α-Kanal auch noch β-Strahlung mitgemessen werden sollte, da nur Stromimpulse von α-Strahlen mit ihren gegenüber β-Strahlen um ca. zwei Grössenordnungen höheren Amplituden verstärkt und diskriminiert werden (Ansprüche 11 bis 13).

Die Erfindung wird im folgenden anhand schematischer Zeichnungen an zwei Ausführungsbeispielen noch näher erläutert. Es zeigen:

Fig. 1 eine Schaltung zur getrennten Messung von α-Strahlen mit einem Proportionalzählrohr in Gegenwart von β- und γ-Strahlen, und

Fig. 2 eine Schaltung zur getrennten und gleichzeitigen Messung von α- und β-Strahlen mit einem Proportionalzählrohr.

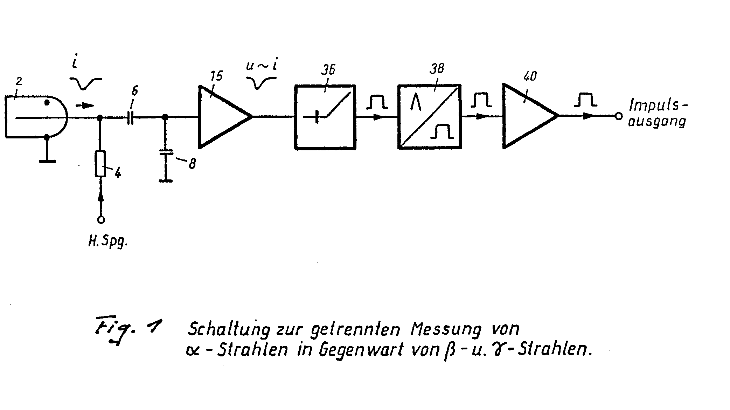

Die Aufgabe der Schaltung gemäss Fig. 1 besteht darin, Zählrohrimpulse, bei denen die Stromamplitude über einem vorgegebenen Grenzwert liegt, von solchen zu unterscheiden, bei denen die Stromamplitude darunter liegt. Die Schaltung gibt jedesmal dann einen Digitalimpuls ab, wenn die Stromamplitude des Zählrohrimpulses über dem vorgegebenen Grenzwert liegt.

Dem Zählrohr 2 wird die zum Betrieb erforderliche Hochspannung über einen Widerstand 4 zugeführt. Der Eingang des Verstärkers 15 ist über den Koppelkondensators 6 mit der auf Hochspannungspotential liegenden Zählrohranode verbunden.

Der Kondensator 6 hat dabei die Aufgabe, die Zählrohranode und den Verstärkereingang für Gleichspannung voneinander zu isolieren und für Impulse miteinander zu verbinden.

Der Widerstand 4 dient ausser zum Schutz des Zählrohres im Störfall zur impulsmässigen Entkopplung von Zählrohranode und Hochspannungsquelle. Typische Werte sind für Kondensator 6: 100 pF bis 1 nF; für Widerstand 4: 1 MOhm bis 1 GOhm.

Ein Proportionalzählrohr stellt eine nahezu ideale Stromquelle dar, der ein Kondensator parallel geschaltet ist. Der Kondensator 8 stellt die gesamte, im wesentlichen aus der Kapazität des Zählrohres und der Verbindungsleitung zwischen Zählrohr und Verstärker bestehende, Parallelkapazität zum Verstärkereingang dar. Dieser Kondensator 8 bildet zusammen mit dem Eingangswiderstand des angeschlossenen Verstärkers 15 ein Integrationsglied für den Zählrohrstrom.

Um unmittelbar ein der Amplitude des Zählrohrstromes proportionales Verstärkereingangssignal zu erhalten, soll die Zeitkonstante dieses Integrationsgliedes klein genug sein im Verhältnis zur Dauer der kürzesten Zählrohrstromimpulse.

Zur Erfüllung dieser Forderung soll der Verstärker 15 einen ausreichend kleinen Eingangswiderstand aufweisen.

Der Verstärker 15 kann aus einer oder mehreren Verstärkerstufen bestehen.

Die Bandbreite dieser Verstärkerstufen soll so gross sein, dass unabhängig von der Dauer der Zählrohrstromimpulse die Amplituden der Ausgangsimpulse noch den Amplituden der Zählrohrstromimpulse proportional sind, d.h. die Eigenanstiegszeit des Verstärkers muss entsprechend kurz sein.

Gut geeignet sind die üblichen schnellen Stromverstärkerschaltungen oder auch schnelle Operationsverstärker (z.B. Valvo TDA 1078), die auch in Form preisgünstiger integrierter Schaltungen zur Verfügung stehen.

Bemisst man den Eingangswiderstand des Verstärkers 15 gleich dem Wellenwiderstand des Verbindungskabels zwischen Zählrohr und Verstärker, dann können grössere Leitungslängen zwischen Zählrohr und Verstärker zugelassen werden, ohne dass sich die Kabelkapazität störend auswirkt.

Es ist zweckmässig, die Bandbreite des Verstärkers nach niederen Frequenzen hin zu begrenzen. Die untere Grenzfrequenz wählt man in der Praxis so, dass die schnellen Anteile des Zählrohrimpulses übertragen und die langsamen Anteile (Ionenimpuls) unterdrückt werden. Man erreicht dadurch eine Verbesserung der Übersteuerungsfestigkeit (geringere Erholzeit nach Übersteuerung), eine Verbesserung des Signal-zu-Rausch-Verhältnisses durch Verminderung der Bandbreite und eine Verhinderung von «Nullinienverschiebung» infolge von Gleichspannungsdriften im Verstärker.

Die Einengung der Bandbreite zu niederen Frequenzen hin kann durch ein oder zwei Differenzierglieder bewirkt werden, wobei zweckmässigerweise das eine Differenzierglied möglichst in der Nähe des Verstärkereingangs und das andere zwischen Verstärkerausgang und Eingang des Integraldiskriminators vorgesehen wird.

Mit der vorstehend beschriebenen Verstärkeranordnung erhält man Verstärkerausgangsimpulse, deren Amplitude dem Zählrohrstrom proportional ist. Diese Impulse werden auf den Eingang eines Integraldiskriminators gegeben. Der Integraldiskriminator 36 gibt dann einen Ausgangsimpuls ab, wenn der Eingangsimpuls einen vorgegebenen Mindestwert überschreitet. Die Gesamtempfindlichkeit von Zählrohrverstärker 15 und Integraldiskriminator 36 wird so eingestellt, dass nur die von α-Strahlen herrührenden Impulse Ausgangsimpulse des Integraldiskriminators 36 bewirken.

Die Ausgangsimpulse des Integraldiskriminators 36 werden durch eine Impulsformerstufe 38 auf eine einheitliche Breite gebracht und danach über eine Treiberstufe auf den Ausgang gegeben.

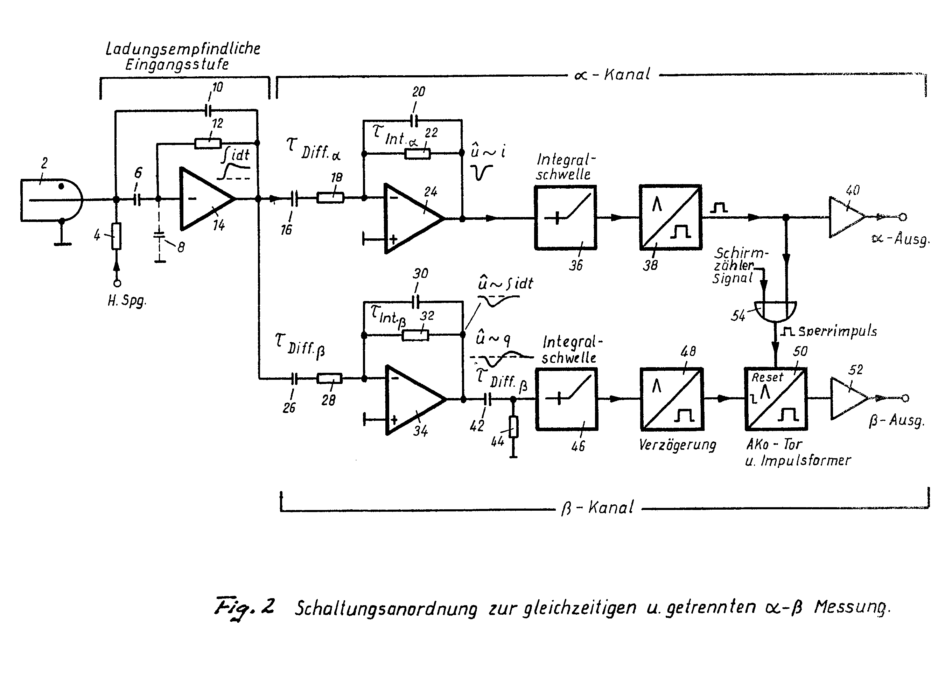

Im folgenden wird nun die Schaltung nach Fig. 2 erläutert.

Um eine gute Unterscheidung zwischen α- und β-Impulsen zu erreichen, soll man die Arbeitsspannung des Zählrohres so niedrig wählen, dass im Übergangsbereich zwischen α- und β-Impulsen bei den α-Impulsen noch keine verstärkungsbegrenzenden Raumladungseffekte auftreten. Diese Bedingung führt dazu, dass der Verstärker ein gutes Signal-zu-Rausch-Verhältnis aufweisen soll, damit die kleinen β-Impulse nicht im Rauschpegel des Verstärkers untergehen.

Die Forderungen nach einerseits hohem Signal-zu-Rausch-Abstand für die β-Messung und andererseits hoher Bandbreite, wie sie für die getrennte α-Messung besteht, sind widersprüchlich und lassen sich mit ein und demselben Verstärker nicht gleichzeitig optimal realisieren.

Zur Lösung des Problems wird in einer exemplarischen Ausführung der Verstärker nach einem gemeinsamen Eingangsverstärker in zwei Zweige aufgeteilt, von denen der eine für die α- und der andere für die β-Messung optimal ausgelegt ist. Die gemeinsame Eingangsstufe wird für ein maximales Signal-zu-Rausch-Verhältnis ausgelegt.

Schaltungsbeschreibung:

Als Eingangsstufe wird eine ladungsempfindliche Verstärkerstufe mit einem Feldeffekt-Transistor im Eingang verwendet. Diese gestattet eine Optimal-Dimensionierung in Hinsicht auf ein grosses Signal-zu-Rausch-Verhältnis und auf kleine Impulsanstiegszeiten am Verstärkerausgang.

Am Ausgang der gemeinsamen Eingangsverstärkerstufe erhält man ein Signal, das dem Integral des Zählrohrstromes entspricht. Für den α-Zweig des Verstärkers wird aus diesem Signal durch Differentiation mit einer ausreichend kurzen Zeitkonstanten wieder ein der Amplitude des Zählrohrstromes proportionales Signal abgeleitet. Die weitere Verarbeitung des so gewonnenen, der Amplitude des Zählrohrstromes proportionalen, Impulses für die α-Messung erfolgt in entsprechender Weise, wie im Zusammenhang mit Fig. 1 beschrieben.

Für den β-Zweig wird das Ausgangssignal der ersten Stufe ebenfalls differenziert. Die Differentiationszeitkonstante wird dabei so gross gewählt, dass einerseits im Gegensatz zum α-Kanal die

Impulsamplitude noch dem Integral des Zählrohrstromes über die gesamte Impulsdauer proportional ist und anderseits sich eine ausreichende Zeitauflösung ergibt. Diese beiden Forderungen lassen sich gut miteinander vereinbaren, solange nicht eine extrem hohe Zeitauflösung verlangt wird. Als Kompromiss kann dabei toleriert werden, dass besonders lange β-Impulse nicht mehr vollständig integriert werden, solange sie mit Sicherheit die Schwelle des Integraldiskriminators im β-Kanal überschreiten.

Die Eingangsstufe wird zweckmässig folgendermassen geschaltet:

Der Zählrohranode wird die zum Betrieb des Zählrohres erforderliche Hochspannung über den Widerstand 4 zugeführt. Der Eingang des Verstärkers 14 ist über den Koppelkondensator 6 und mit der Zählrohranode verbunden. Der Kondensator 6 dient zur gleichspannungsmässigen Trennung zwischen dem Potential am Eingang des Verstärkers 14 und dem Potential an der Zählrohranode; impulsmässig verbindet er beide miteinander.

Der Widerstand 4 dient, ausser zum Schutz des Zählrohres im Störfall, zur impulsmässigen Entkoppelung von Zählrohranode und Hochspannungsquelle. Sein Widerstandswert soll gross sein gegenüber dem Wert des Widerstands 12, aber noch nicht so gross, dass der maximal auftretende mittlere Zählrohrstrom einen Spannungsabfall ergibt, der den Arbeitspunkt des Zählrohres störend beeinflusst.

Der Verstärker ist als ladungsempfindliche Stufe geschaltet. Hierzu wird eine invertierende Verstärkerstufe 14 verwendet, die über einen Kondensator 10 gegengekoppelt ist. Damit der Wert der effektiven Eingangskapazität nicht durch den Koppelkondensator 6 vermindert wird, wird der Kondensator 10 direkt zwischen Verstärkerausgang und Zählrohranode geschaltet. Er soll also eine der Betriebsspannung des Zählrohres 2 entsprechende Spannungsfestigkeit aufweisen. Der zum Kondensator 10 parallel liegende Entladewiderstand 12 verbindet den Verstärkerausgang mit dem Verstärkereingang. Die sich aus dem RC-Produkt von Gegenkoppelkondensator 10 und Gegenkoppelwiderstand 12 ergebende Zeitkonstante bestimmt die Abfallzeit der Impulse am Ausgang des Verstärkers 14. Die Bandbreite des Verstärkers 14 soll so hoch sein, dass die Eigenanstiegszeit des Verstärkers kurz ist im Vergleich zur Dauer der kürzesten Zählrohrimpulse. In diesem Fall ist die Dauer des Impulsanstiegs am Ausgang des Verstärkers 14 gleich der Dauer der Stromimpulse an der Zählrohranode.

Der im Blockschaltplan gestrichelt eingezeichnete Kondensator 8 stellt die gesamte zwischen Verstärkereingang und Masse wirksame Kapazität dar. Diese setzt sich im wesentlichen zusammen aus den Kapazitäten des Zählrohres, der Verbindungsleitung zwischen Zählrohr und Verstärker und der Kapazität des Verstärkereingangs gegen Masse.

Im Interesse einer kurzen Anstiegszeit am Ausgangsverstärker 14 und eines grossen Signal-zu-Rausch-Verhältnisses muss die Kapazität des Kondensators 8 möglichst klein sein. Um dies zu erreichen, muss das Zählrohr direkt ohne Zwischenschaltung eines Kabels mit der ladungsempfindlichen Eingangsstufe verbunden werden.

Zur Erzielung eines optimalen Signal-zu-Rausch-Abstandes müssen die Kapazitäten von Kondensator 10 und 8 möglichst klein und die Widerstandswerte der Widerstände 4 und 12 möglichst gross gewählt werden. Typische Werte sind:

Kondensator 10: 1–5 pF
Widerstand 12: 10–50 MOhm
Widerstand 4: 100–1000 MOhm
Kondensator 6: ca. 1 nF.

Der α-Kanal ist zweckmässig folgendermassen geschaltet:

Im α-Kanal wird durch Differentiation aus dem Ausgangssignal der ladungsempfindlichen Eingangsstufe wieder ein Impuls gewonnen, dessen Amplitude der Amplitude des Stromes der Zählrohranode proportional ist.

Hierzu wird der als Differenzierer und Verstärker beschaltete Operationsverstärker 24 benutzt. Zur Differenzierung wird der Eingang des Operationsverstärkers über ein, aus der Serienschaltung des Widerstandes 18 mit dem Kondensator 16 bestehendes, Differenzierglied angesteuert. Der Gegenkopplungszweig zwischen Ausgang und Eingang des Operationsverstärkers besteht aus der Parallelschaltung eines Widerstandes 22 mit einem Kondensator 20. Die Bandbreite des Operationsverstärkers 24 und die Zeitkonstante des aus der Parallelschaltung des Widerstandes 22 mit dem Kondensator 20 bestehenden Integrationsgliedes sollen so bemessen sein, dass die Anstiegszeit der Impulse am Ausgang des Verstärkers 24 noch klein ist gegenüber der Dauer der kürzesten Anodenstromimpulse des Zählrohres.

Typische Werte für die Dimensionierung sind:

Differenzierzeitkonstante: 10 ns (Kondensator 16: 22 pF; Widerstand 18: 470 Ohm).
Integrationszeitkonstante: 10 ns (Widerstand 22: 8,2 kOhm; Kondensator 20: 1 pF).

Für den Verstärker 24 können handelsübliche schnelle Breitbandverstärker, wie z.B. TDA 1078 (Valvo) verwendet werden.

Das Ausgangssignal des Verstärkers 24 wird auf den Eingang eines Integraldiskriminators 36 gegeben. Die Ausgangsimpulse des Integraldiskriminators 36 triggern eine Impulsformerstufe 38, die aus den Ausgangsimpulsen des Integraldiskriminators Impulse einheitlicher Breite formt. Diese Impulse werden über eine Treiberstufe 40 auf den Ausgang des α-Kanals gegeben.

Die Ansprechschwelle des Integraldiskriminators soll dabei so festgelegt werden, dass nur durch α-Teilchen ausgelöste Impulse Ausgangsimpulse bewirken.

Die Breite des Ausgangsimpulses vom Impulsformer 38 wird so gewählt, dass der Impuls direkt als Sperrimpuls für die Antikoinzidenz im β-Kanal verwendet werden kann. Ein typischer Wert ist z.B. 10 μs.

Der β-Kanal wird zweckmässig folgendermassen geschaltet:

Im Eingang des Verstärker-Diskriminator-Zweiges für die β-Messung wird das Ausgangssignal der ladungsempfindlichen Eingangsstufe durch einen entsprechend beschalteten Operationsverstärker 34 differenziert, verstärkt und integriert.

Die Differenzierung erfolgt durch die Serienschaltung des Kondensators 26 mit dem Widerstand 28 im Eingangszweig des Operationsverstärkers 34. Der Gegenkopplungszweig vom Ausgang zum Eingang des Operationsverstärkers 34 besteht aus der Parallelschaltung eines Widerstandes 32 mit einem Kondensator 30. Die sich aus den RC-Produkten von Widerstand 28 und Kondensator 26 sowie Widerstand 32 und Kondensator 30 ergebenden Zeitkonstanten betragen typischerweise 1–2 μs. Damit erhält man am Ausgang des Verstärkers 34 ein Signal, dessen Amplitude dem Integral des Zählrohrstromimpulses, also der gesamten pro Impuls vom Zählrohr abgegebenen Ladung, proportional ist.

Typische Werte der Bauelemente sind:
Kondensator 26: 2,2 nF
Widerstand 28: 470 Ohm
Kondensator 30: 10 pF
Widerstand 32: 56 kOhm.

Das Ausgangssignal des Verstärkers 34 wird über einen aus dem Kondensator 42 und dem Widerstand 44 bestehenden Differenzierglied nochmals differenziert und danach auf den Eingang des Integraldiskriminators 46 gegeben. Diese zweite Differentiation verbessert die Zeitauflösung und verhindert eine «Base-line»-Verschiebung bei hohen Impulsraten. Die Ansprechschwelle des Integraldiskriminators 46 liegt knapp über dem Rauschpegel des Ausgangssignals von Verstärker 34 (z.B. bei 20 mV).

Das Ausgangssignal des Integraldiskriminators 46 steuert den Eingang des Impulsformers 48 an, der an seinem Ausgang Impulse gleicher Breite liefert. Von der Rückflanke dieser Impulse wird das Triggersignal für den Impulsformer 50 des Antikoinzidenztores abgeleitet. Die Impulsbreite ist daher gleich der Verzögerung des Messsignals vor dem Antikoinzidenztor.

Diese Verzögerungszeit soll grösser sein als die grössten durch Driftzeitunterschiede der Primärladungen in den Zählrohren verursachten Zeitverzögerungen von Schirmzählersignalen gegenüber Messzählersignalen.

Der Impulsformer 50 bildet das eigentliche Antikoinzidenztor. Dieser Impulsformer wird von der Rückflanke der Impulse im β-Kanal getriggert. Er gibt nur dann einen Ausgangsimpuls ab, wenn während der Rückflanke des β-Impulses am «Reset»-Eingang kein Sperrimpuls ansteht. Die Ausgangsimpulse haben eine Breite von typisch 1 μs und werden über eine Treiberstufe auf den Ausgang des β-Kanals gegeben.

Über diese Antikoinzidenzschaltung werden die von α-Strahlung im β-Kanal verursachten Impulse unterdrückt. Dieses Verfahren hat gegenüber einer Differenzbildung den Vorteil, dass die statisti-

sche Unsicherheit der β-Messung nicht von der Rate im α-Kanal beeinflusst wird.

Über den freien Eingang des «ODER-GATTERS» 54 können Sperrimpulse von einem zusätzlichen Schirmzählerkanal eingespeist werden. Mit Hilfe dieses Eingangs für Schirmzählerimpulse können im Schirm- und β-Kanal koinzident auftretende Impulse unterdrückt und damit der β-Nulleffekt vermindert werden.

Die erfindungsgemässen Verfahren und Vorrichtungen finden gemäss Anspruch 14 vorzugsweise Anwendungen für den Strahlenschutz zur Überwachung des Auftretens, insbesondere biologisch schädlicher Strahlung wie vor allem α-Strahlung. Nach der Erfindung lassen sich Monitore für Proben bauen, die auf Kontamination zu untersuchen sind. Insbesondere kann dabei eine Überwachung von Händen, Schuhen, Kleidern, Wäsche, Wasser, Luft, Filtern etc. erfolgen.

Bei der Beurteilung der Leistung eines Systems zur gleichzeitigen getrennten α- und β-Messung ist vor allem die Einstreuung von β-Teilchen in den α-Kanal zu prüfen. Denn die Einstreuung von α-Teilchen in den β-Kanal ist weniger kritisch; fast immer liegt die nachzuweisende β-Rate um Grössenordnungen über der α-Rate. Ausserdem hat ein Proportional-Grossflächendurchflusszähler der oben beschriebenen Art von vornherein einen β-Nulleffekt von typisch 20 Imp/min, dagegen einen α-Nulleffekt von weniger als 1 Imp/min, so dass schon sehr geringe Einstreufaktoren vom β-Kanal in den α-Kanal zu merklichen Nulleffekterhöhungen im α-Kanal führen würden. Noch kritischer ist, dass auch Erhöhungen des Umgebungspegels an γ-Strahlung über verschiedene Wechselwirkungen, wie z.B. Compton-Effekt, zur Bildung von Elektronen im Zählrohr führen, die von β-Teilchen nicht zu unterscheiden sind und daher ebenfalls zu Nulleffekterhöhungen im α-Kanal führen würden.

Die Reduzierung der Einstreuung von β- und γ-Strahlung in den α-Kanal wurde bereits beschrieben. Das hier beschriebene Verfahren brachte bei der gleichzeitigen α- und β-Messung jedoch auch eine Erhöhung der Zählausbeute für α-Strahler um ca. 10% (relativ) mit sich, da durch die Eliminierung des Überlappungsbereichs zwischen α- und β-Strahlen auch sehr niederenergetische α-Strahler ohne die Gefahr der Einstreuung von β-Strahlen erfasst werden konnten. Dies führte wiederum dazu, dass auch die Einstreuung von α-Teilchen in den β-Kanal entsprechend reduziert werden konnte.

## Patentansprüche

1. Verfahren zum Unterscheiden von α-Strahlen einerseits und von β- und/oder γ-Strahlen anderseits mittels mindestens eines Proportionalzählrohres, dadurch gekennzeichnet, dass die von einzelnen Strahlen bewirkten, zwischen Anode und Kathode des Proportionalzählrohres auftretenden elektrischen Signale aufgrund der dabei auftretenden Stromstärken des Zählrohrstromes unterschieden werden.

2. Verfahren nach Anspruch 1, gekennzeichnet durch Wahl eines Strom-Schwellenwertes, oberhalb dessen die Stromstärken α-Strahlen und unterhalb dessen die Stromstärken β- und/oder γ-Strahlen zuzuordnen sind.

3. Verfahren nach Anspruch 1, gekennzeichnet durch Vielkanaldiskriminierung der Stromamplituden.

4. Verfahren nach Anspruch 2 oder 3 zur spezifischen Zählung von α-Teilchen, dadurch gekennzeichnet, dass nur die einen gewählten Strom-Schwellenwert übersteigenden Ereignisse gezählt werden.

5. Verfahren zur spezifischen Zählung von einerseits α-Strahlen und anderseits β-Strahlen und/oder γ-Strahlen nach Anspruch 4, dadurch gekennzeichnet, dass nacheinander bei einer niedrigeren Arbeitsspannung des Zählrohres die α-Strahlen und bei einer höheren Arbeitsspannung des Zählrohres auch die β- und γ-Strahlen dann gezählt werden, wenn die Stromamplitude einen bestimmten Schwellenwert überschreitet, und dass zur Zählung der β-Teilchen und/oder γ-Quanten die Differenz aus den bei erhöhter Arbeitsspannung gemessenen Ereignissen und den bei niedriger Arbeitsspannung gezählten α-Teilchen gebildet wird.

6. Verfahren nach Anspruch 5, dadurch gekennzeichnet, dass bei den beiden Zählungen mit unterschiedlicher Arbeitsspannung nur die Arbeitsspannung des Zählrohres unterschiedlich gewählt wird.

7. Verfahren zu einer in zwei nacheinander durchzuführenden Messungen erfolgenden Zählung von α-Teilchen einerseits und von β-Teilchen und/oder γ-Quanten anderseits nach Anspruch 4, dadurch gekennzeichnet, dass bei einer gegenüber der α-Messung erhöhten Arbeitsspannung des Zählrohres alle Ereignisse in an sich bekannter Weise energieabhängig (durch Messung der Ladung) gezählt werden, und dass zur Zählung der β-Teilchen und/oder γ-Quanten die Differenz aus den bei erhöhter Arbeitsspannung gemessenen Ereignissen und den bei niedrigerer Arbeitsspannung stromabhängig gezählten α-Teilchen gebildet wird.

8. Verfahren zur gleichzeitigen Zählung von α-Teilchen einerseits und von β-Teilchen und/oder γ-Quanten anderseits nach Anspruch 1, dadurch gekennzeichnet, dass den α-Strahlen ein erster höherer Strom-Amplitudenbereich und den β-Teilchen und/oder γ-Quanten ein zweiter Stromamplitudenbereich zugeordnet wird und die Ereignisse in den beiden Stromamplitudenbereichen gesondert gleichzeitig gezählt werden.

9. Verfahren zur gleichzeitigen Zählung von α-Teilchen einerseits und von β-Teilchen und/oder γ-Quanten anderseits nach Anspruch 4, dadurch gekennzeichnet, dass die Summe der α-, β- und γ-Ereignisse zusätzlich zu der stromabhängigen Messung der α-Ereignisse in an sich bekannter Weise energieabhängig durch Messung der Ladung gemessen und diejenigen Ereignisse als β- und γ-Ereignisse gezählt werden, welche nicht gleichzeitig mit den stromstärkenabhängig ge-

messenen α-Ereignissen auftreten (Antikoinzidenzzählung).

10. Verfahren nach einem der Ansprüche 1 bis 9, dadurch gekennzeichnet, dass zum Nachweis der α-Strahlung die Stromstärke direkt als einziger Parameter gemessen wird.

11. Vorrichtung zum Ausführen des Verfahrens nach Anspruch 10, gekennzeichnet durch eine Verstärkerstufe (14), der die Ausgangssignale des Zählrohres (2) zunächst zugeführt werden und deren Zeitverhalten dem aus einem einfachen RC-Glied gebildeten Integrator entspricht, so dass das Ausgangssignal wie bei der üblichen energieabhängigen Messung dem zeitlichen Integral des Zählrohrstromes proportional ist, durch eine Verzweigung des Ausgangssignals der Verstärkerstufe (14) auf einen ersten Zweig, der eine Differenzierschaltung (16, 18, 24) zur Gewinnung eines dem Zählrohrstrom proportionalen Signales und einen daran anschliessenden Integraldiskriminator (36) aufweist, dessen Ausgangssignale α-Teilchen zugeordnet werden, und auf einen zweiten Zweig, der einen Nachverstärker (34) mit anschliessendem Integraldiskriminator (46), dessen Ausgangsimpulse α-, β- und γ-Strahlen zugeordnet werden, aufweist, sowie durch eine Antikoinzidenzschaltung (50), welche nur dann Impulse vom zweiten Zweig durchlässt, wenn nicht gleichzeitig ein Impuls vom ersten Zweig anliegt, wobei die Ausgangsimpulse β- und/oder γ-Strahlung zugeordnet sind.

12. Vorrichtung nach Anspruch 11, dadurch gekennzeichnet, dass die integrierende Zeitkonstante der Verstärkerstufe (14) mindestens 0,5 μs beträgt, wobei zusätzliche, z.B. durch die endliche Bandbreite der Verstärkerschaltung gegebene, Integrationen eine Zeitkonstante von weniger als 10 ns haben.

13. Vorrichtung nach Anspruch 11 oder 12, dadurch gekennzeichnet, dass im ersten Zweig die differenzierende Zeitkonstante der Differenzierschaltung (16, 18, 24) im Bereich 5–50 ns liegt.

14. Anwendung des Verfahrens nach einem der Ansprüche 1 bis 10 und/oder der Vorrichtung nach einem der Ansprüche 11 bis 13 für den Strahlenschutz.

## Claims

1. Method of differentiating between alpha rays on the one hand and beta and/or gamma rays on the other hand by means of at least one proportional counter tube, characterised in that the electrical signals produced by individual rays and occurring between anode and cathode of the proportional counter tube are differentiated on the basis of the then occurring current intensities of the counter tube current.

2. Method according to claim 1, characterised by choice of a current threshold value above which the current intensities are associated with alpha rays and below which the current intensities are associated with beta and/or gamma rays.

3. Method according to claim 1, characterised by multichannel discrimination of current amplitudes.

4. Method according to claim 2 or 3 for the specific counting of alpha particles, characterised in that only the events which exceed a selected current threshold value are counted.

5. Method for the specific counting of on the one hand alpha rays and on the other hand beta rays and/or gamma tays according to claim 4, characterised in that, in succession, at a relatively low working voltage of the counter tube the alpha rays are counted and at a relatively high working voltage of the counter tube the beta and gamma rays are also counted when the current amplitude exceeds a specific threshold value, and that the difference between the events measured at high working voltage and the alpha particles counted at low working voltage is formed for counting the beta particles and/or gamma quanta.

6. Method according to claim 5, characterised in that in the two counting operations with differing working voltage only the working voltage of the counter tube is differently chosen.

7. Method for the counting, effected in two measuring operations to be carried out in succession, of alpha particles on the one hand and beta particles and/or gamma quanta on the other hand according to claim 4, characterised in that with a counter tube working voltage increased relatively to the alpha measurement all the events are counted in energy-dependent manner (by measuring the charge) in a manner known per se, and that the difference between the events measured at elevated working voltage and the alpha particles counted in current-dependent manner manner at relatively low working voltage is formed for counting the beta particles and/or gamma quanta.

8. Method for the simultaneous counting of alpha particles on the one hand and beta particles and/or gamma quanta on the other hand according to claim 1, characterised in that a first relatively high current amplitude range is associated with alpha particles and a second current amplitude range is associated with the beta particles and/or gamma quanta, and the events in the two current amplitude ranges are counted separately at the same time.

9. Method for the simultaneous counting of alpha particles on the one hand and beta particles and/or gamma quanta on the other hand according to claim 4, characterised in that additionally to the current-dependent measuring of the alpha events the sum of the alpha, beta and gamma events is measured in energy-dependent fashion in a manner known per se by measuring the charge, and those events are counted as beta and gamma events which do not occur simultaneously with the alpha events measured in dependence on current intensity (anti-coincidence counting).

10. Method according to one of claims 1 to 9, characterised in that the current intensity is measured directly as sole parameter as evidence for the alpha rays.

11. Device for carrying out the method according to claim 10, characterised by an amplifier stage (14) to which the output signals of the counter tube (2) are fed in the first instance and whose time behaviour corresponds to the integrator formed of a simple R-C element, so that the output signal is proportional to the time integral of the counter tube current as in the case of the usual energy-dependent measuring arrangement, by branching the output signal of the amplifier stage (14) to a first branch, which comprises a differentiating circuit (16, 18, 24) for obtaining a signal proportional to the counter tube current and a following integral discriminator (36) whose output signals are associated with alpha particles, and to a second branch comprising an additional amplifier (34) with a following integral discriminator (46) whose output pulses are associated with alpha, beta and gamma rays, also by an anti-coincidence circuit (50) which allows pulses from the second branch to pass only when a pulse from the first branch is not simultaneously present, the output pulses being associated with beta and/or gamma radiation.

12. Device according to claim 11, characterised in that the integrating time constant of the amplifier stage (14) amounts to at least 0.5 µs, and additional integrations, e.g. those resulting from the finite band width of the amplifier circuit, have a time constant of less than 10 ns.

13. Device according to claim 11 or 12, characterised in that in the first branch the differentiating time constant of the differentiating circuit (16, 18, 24) is in the range 5–50 ns.

14. Application of the method according to one of claims 1 to 10 and/or of the device according to one of claims 11 to 13 to protection against radiation.

## Revendications

1. Procédé de discrimination de rayons α d'une part et de rayons β et/ou γ d'autre part à l'aide d'un tube compteur proportionel au moins, ledit procédé étant caractérisé en ce que les signaux électriques produits par les divers rayons et apparaissant entre l'anode et la cathode du tube compteur proportionnel sont discriminés par les intensités du courant du tube compteur.

2. Procédé selon revendication 1, caractérisé par le choix d'un seuil de courant au-dessus duquel sont affectées les intensités des rayons α et au-dessus duquel sont affectées les intensités des rayons β et/ou γ.

3. Procédé selon revendication 1, caractérisé par une discrimination multicanal des amplitudes de courant.

4. Procédé selon une des revendications 2 ou 3 pour le comptage spécifique de particules α, caractérisé en ce que seuls les évènements dépassant un seuil de courant sélecté sont comptés.

5. Procédé de comptage spécifique de rayons α d'une part et de rayons β et/ou γ d'autre part selon revendication 4, caractérisé en ce que les rayons α sont comptés sous une faible tension de service du tube compteur, puis les rayons β et γ sont comptés sous une tension de service plus élevée du tube compteur quand l'amplitude du courant dépasse un seuil déterminé; et la différence des évènements mesurés sous la haute tension de service et des particules α comptées sous la basse tension de service est formée pour le comptage des particules β et/ou des quanta γ.

6. Procédé selon revendication 5, caractérisé en ce que seule la tension de service du tube compteur varie lors des deux comptages sous tension de service différente.

7. Procédé pour le comptage de particules α d'une part et de particules β et/ou de quanta γ d'autre part, effectué en deux mesures successives, selon revendication 4, caractérisé en ce que tous les évènements sont comptés de façon connue, en fonction de l'énergie (par mesure de la charge), à une tension de service du tube compteur plus élevée que pour la mesure α; et la différence des évènements mesurés sous la haute tension de service et des particules α comptées en fonction du courant, sous la basse tension de service, est formée pour le comptage des particules β et des quanta γ.

8. Procédé de comptage simultané de particules α d'une part et de particules β et/ou de quanta γ d'autre part selon revendication 1, caractérisé en ce qu'un premier domaine supérieur d'amplitude de courant est affecté aux rayons α et un second domaine d'amplitude de courant est affecté aux particules β et/ou quanta γ; et les évènements sont comptés simultanément et séparément dans les deux domaines d'amplitudes de courant.

9. Procédé de comptage simultané de particules α d'une part et de particules β et/ou de quanta γ d'autre part selon revendication 4, caractérisé en ce qu'en plus de la mesure des évènements α en fonction du courant, la somme des évènements α, β et γ est mesurée de façon connue, en fonction de l'énergie, par mesure de la charge; et les évènements comptés comme évènements β et γ sont ceux qui n'apparaissent pas simultanément avec les évènements α mesurés en fonction de l'intensité (comptage à anticoïncidence).

10. Procédé selon une quelconque des revendications 1 à 9, caractérisé en ce que l'intensité du courant est mesurée directement comme unique paramètre de détection du rayonnement α.

11. Dispositif pour la mise en œuvre du procédé selon revendication 10, caractérisé par un étage amplificateur (14), auquel les signaux de sortie du tube compteur (2) sont d'abord appliqués et dont l'action est celle d'un intégrateur constitué par un simple élément RC, de sorte que le signal de sortie est proportionnel à l'intégrale temporelle du courant du tube compteur, comme dans la mesure usuelle en fonction de l'énergie; une dérivation du signal de sortie de l'étage amplificateur (14) sur une première branche, qui comprend un circuit différentiateur (16, 18, 24) délivrant un signal proportionnel au courant du tube compteur et suivi d'un discriminateur intégral (36), dont les signaux de sortie sont affectés aux particules α, et

sur une seconde branche, qui comprend un post-amplificateur (34) avec un discriminateur intégral (46) en aval, dont les impulsions de sortie sont affectées aux rayons α, β et γ; et un sélecteur d'anticoïncidences (50) qui transmet des impulsions de la seconde branche uniquement en l'absence d'une impulsion de la première branche, les impulsions de sortie étant affectées aux rayonnements β et/ou γ.

12. Dispositif selon revendication 11, caractérisé en ce que la constante de temps d'intégration de l'étage amplificateur (14) est de 0,5 µs au minimum, la constante de temps d'intégrations supplémentaires, dues par exemple à la bande passante finie du circuit amplificateur, étant inférieure à 10 ns.

13. Dispositif selon une des revendications 11 ou 12, caractérisé en ce que la constante de temps du circuit différentiateur (16, 18, 24) dans la première branche est comprise entre 5 et 50 ns.

14. Application du procédé selon une quelconque des revendications 1 à 10 et/ou du dispositif selon une quelconque des revendications 11 à 13 à la protection contre le rayonnement.

**Fig. 1**  Schaltung zur getrennten Messung von
α - Strahlen in Gegenwart von β - u. γ - Strahlen.

**Fig. 2** Schaltungsanordnung zur gleichzeitigen u. getrennten α-β Messung.